# EUROPÄISCHE PATENTSCHRIFT

(11) **EP 2 227 852 B1**
(45) Veröffentlichungstag und Bekanntmachung des Hinweises auf die Patenterteilung: **01.06.2011**
(21) Anmeldenummer: 07802838.8
(22) Anmeldetag: 23.08.2007
(51) Int. Cl.: H02K 7/116, H02K 16/00

(54) **ANTRIEBSEINRICHTUNG**
DRIVE DEVICE
DISPOSITIF D'ENTRAINEMENT

(43) Veröffentlichungstag der Anmeldung: 15.09.2010
(73) Patentinhaber: Tekoma Sàrl, 1785 Cressier (CH)
(72) Erfinder: KNECHT, Paul, CH-1785 Cressier (CH)
(74) Vertreter: BOVARD AG
(86) Internationale Anmeldenummer: PCT/EP2007/058785
(87) Internationale Veröffentlichungsnummer: WO 2009/024191

(56) Entgegenhaltungen:
- WO-A-03/055709
- JP-A- 63 117 635
- JP-A- 63 274 341
- JP-A- 2007 159 287
- US-A- 2 436 936
- US-A- 4 525 655

## Beschreibung

### Technisches Gebiet

Die Erfindung betrifft eine Antriebseinrichtung, umfassend mindestens einen ersten Antriebmotor, einen zweiten Antriebmotor und eine Kraftübertragungsanordnung, wobei die Leistungen des ersten Antriebmotors und/ oder des zweiten Antriebmotors über die Kraftübertragungsanordnung an eine An-/ Abtriebswelle übertragbar sind.

### Stand der Technik

Es sind verschiedene Varianten von elektrischen Antriebssystemen bekannt. Die meisten dieser verschiedenen Varianten sind schon vor geraumer Zeit erfunden worden, und haben sich bis heute nicht wesentlich verändert. Die elektrischen Antriebssysteme funktionieren grundsätzlich dank den Kräften, die durch das Aufeinanderwirken von verschiedenen Magnetfeldern entstehen. So werden meistens rotierende Bewegungen erzeugt, wobei es auch Elektromotoren gibt, welche auch translatorische Bewegungen ausführen (Linearantrieb). Elektromotoren werden zum Antrieb verschiedenster Arbeitsmaschinen und Fahrzeuge (insbesondere Schienenfahrzeuge) eingesetzt.

Diese elektrischen Antriebssysteme haben zum Teil viele unterschiedliche Bezeichnungen. Grundsätzlich können aber alle diese Systeme in einige wenige Gruppen eingeteilt werden. So können die Elektromotore beispielsweise in die Gruppen der so genannten Drehstrom-, Gleichstrom-, Schritt-, Synchron-, Asynchron- oder Reluktanzmotoren unterteilt werden. Jede dieser Elektromotorvarianten besitzt gewisse Vorteile aber auch gewisse Nachteile gegenüber den anderen Typen. So unterscheiden sich diese Varianten insbesondere mit Bezug auf deren Leistung, den Wirkungsgrad, den Preis, den Stromverbrauch, die Robustheit, etc. Ausserdem existieren innerhalb jeder Variante wiederum verschiedenste Ausführungstypen von Motoren, welche wiederum viele unterschiedliche Eigenschaften haben. Da die Anwendungen der Elektromotoren ebenfalls sehr vielfältig sind, kann auch nicht von einem besten Antrieb gesprochen werden, welcher in allen Situationen und Einsatzbereichen die optimalsten Ergebnisse erzielen würde.

So werden bei gewissen Anwendungen aufgrund der Erfordernisse zwei oder gar mehrere verschiedene Elektromotorenvarianten benötigt, so dass in jeder Situation die optimale Motorenvariante eingesetzt werden kann. Zudem kann in gewissen Fällen eine schnelle Abwechslung verschiedener Motorenvarianten notwendig sein, was mit den herkömmlichen Antriebssystemen gar nicht oder sehr schwierig realisierbar ist. Diese Situation ist selbstverständlich nicht zufriedenstellend, da eine unnötige Verdopplung (oder Vervielfachung) der installierten Antriebskapazitäten notwendig ist. Dabei wird zwangsläufig jeweils nur ein Teil der Antriebsmöglichkeiten ausgenützt. Nicht zuletzt ist bei jeder Änderung der Antriebsvariante ein Anlauf notwendig, welcher die effektive Leistungsausnutzung vermindert, aber den Energieverbrauch vergrössert.

Zudem sind bereits Anordnungen bekannt, in welchen zwei Motorenleistungen zu einer kombiniert werden. Diese Kombination wird meistens durch die so genannten Summiergetriebe realisiert. So werden zum Beispiel Schiffsschrauben durch zwei Motoren über ein Summiergetriebe angetrieben. Zudem werden auch immer mehr Autos durch zwei Motoren angetrieben, und über ein so genanntes Überlagerungsgetriebe zu einer einzigen Leistung zusammengefasst. Dabei werden oft zwei verschiedene Motorentypen eingesetzt, wobei üblicherweise ein Verbrennungsmotor mit einem Elektromotor kombiniert wird. In diesem Zusammenhang wird oft auch von Hybridautos bzw. vom Hybridantrieb gesprochen. Des Weiteren gibt es Anwendungen, bei welchen ein erster Motor grosse Leistungen bei konstanter Drehzahl liefert. Ein zweiter, in der Regel kleinerer Motor mit veränderbarer Drehzahl und ein Summiergetriebe vervollständigen diese Anordnung, bei welcher am Ausgang eine feine Drehzahländerung erreicht werden kann. Solche Anordnungen werden insbesondere in den Walzanlagen verwendet, in welchen die Umformungsgeschwindigkeit sehr oft geregelt werden muss. Schliesslich existieren auch Anwendungen, bei welchen die Motorenverdopplung aus Sicherheitsgründen notwendig ist. Zum Beispiel werden Flugzeugkraftstoffpumpen üblicherweise durch zwei Elektromotore und ein Summiergetriebe angetrieben, damit die Kraftstoffzufuhr auch beim Ausfall eines Motors gewährleistet bleibt. Allerdings werden in allen herkömmlichen Anordnungen komplexe Getriebe- und/oder Kupplungsmechanismen verwendet, was deren Struktur unnötig kompliziert. Ausserdem nehmen herkömmliche Anordnungen sehr viel Platz ein, so dass deren Verwendung bei kompakten Anwendungen sehr schwierig oder gar vollkommen unmöglich erscheint.

Nicht zuletzt haben viele herkömmliche Elektromotoren den Nachteil, dass beim Anfahren (d.h. beim allmählichen Beschleunigen aus dem Ruhezustand) sehr grosse Energiebelastungen und Stromspitzen verzeichnet werden, welche den Wirkungsgrad solcher Motoren erheblich verkleinern. Auch ist das sehr langsame Beschleunigen oder das Drehen der herkömmlichen Elektromotore mit einer sehr niedrigen Drehzahl äusserst schwierig und mit einem grossen Energieverbrauch verbunden.

US 4 525 655 offenbart eine Antriebseinrichtung mit zwei Motoren.

### Offenbarung der Erfindung

Die Aufgabe der vorliegenden Erfindung besteht deshalb darin, eine Antriebseinrichtung derart auszugestalten, dass eine beliebige Motorenvariante mittels dieser einen Antriebsanordnung realisiert werden kann, wobei auch der Energieverbrauch einer solchen Antriebsanordnung möglichst verringert, aber der Wirkungsgrad möglichst erhöht werden sollte. Mit anderen Worten soll ein universell verwendbarer Antrieb zur Verfügung gestellt werden, welcher nicht nur einen höheren Wirkungsgrad und einen niedrigeren Energieverbrauch aufweist, sondern welcher ausserdem eine kompakte und einfache Bauweise hat, so dass er grundsätzlich überall sehr einfach eingesetzt werden kann.

Gemäss der vorliegenden Erfindung werden diese Ziele insbesondere durch die Elemente der unabhängigen Ansprüche erreicht. Weitere vorteilhafte Ausführungsvarianten gehen ausserdem aus den abhängigen Ansprüchen und der Beschreibung hervor.

Insbesondere werden diese Ziele durch die Erfindung dadurch erreicht, dass in einer Antriebseinrichtung, umfassend mindestens einen ersten Antriebmotor, einen zweiten Antriebmotor und eine Kraftübertragungsanordnung, wobei die Leistungen des ersten Antriebmotors und/oder des zweiten Antriebmotors über die Kraftübertragungsanordnung an eine An-/Abtriebswelle übertragbar sind, die Kraftübertragungsanordnung aus einem Planetengetriebe mit drei An-/Abtriebsebenen gebildet ist, wobei mittels des ersten Antriebmotors eine erste An-/Abtriebsebene des Planetengetriebes und mittels des zweiten Antriebmotors eine andere An-/Abtriebsebene des Planetengetriebes antreibbar sind. Die Vorteile dieser Erfindung liegen insbesondere darin, dass dank der zur Verfügung gestellten Antriebseinrichtung eine beliebige Motorenvariante auf einfachste Weise simuliert werden kann. Insbesondere können mittels dieser Antriebseinrichtung auch beliebige resultierende Drehzahlen (die Drehzahlen der An-/Abtriebswelle) erreicht werden, ohne dass die Antriebmotore überhitzt werden, oder dass sie in einem ungünstigen Drehzahlbereich betrieben werden müssten. Ausserdem entstehen auch bei sehr kleinen resultierenden Drehzahlen der An-/Abtriebswelle keine übermässig hohen Anfahrmomente.

In einer Ausführungsform der vorliegenden Erfindung ist die Sonnenradebene des Planetengetriebes als die An-/Abtriebswelle der Antriebseinrichtung ausgebildet. Diese Ausführungsform hat unter anderem den Vorteil, dass die Kraftübertragungsanordnung und damit auch die gesamte Antriebseinrichtung sehr kompakt gebaut werden können. Dadurch kann die Antriebseinrichtung vorteilhaft in verschiedenen Situationen eingesetzt werden, bei welchen herkömmliche Antriebssysteme aus Platzmangelgründen nicht einsetzbar sind. Zudem besteht eine solche Antriebseinrichtung aus weniger Bestandteilen, wodurch auch die möglichen Betriebsstörungen verhindert oder aber der Betriebsunterhalt vereinfacht werden können.

In vorteilhafter Weise sind mittels des ersten Antriebmotors die Planetenradebene des Planetengetriebes, und mittels des zweiten Antriebmotors die Hohlradebene des Planetengetriebes antreibbar. Diese Ausführungsform hat unter anderem den Vorteil, dass durch die optimale Kräfteübetragung und das geschickt gewählte Übersetzungsverhältnis die An-/Abtriebswelle beliebig angetrieben werden kann. Insbesondere ist es möglich, die Drehung dieser An-/Abtriebswelle vollständig einzustellen (d.h. die An-/Abtriebswelle befindet sich im vollkommenen Stillstand), während sich die beiden Antriebmotoren trotzdem in einem optimalen Drehzahlbereich drehen. Auch ist es dadurch möglich, sehr feine Drehungen der An-/Abtriebswelle zu realisieren, ohne dass die Antriebmotoren überhitzt und den grossen Belastungen ausgesetzt werden.

In einer anderen Ausführungsform sind mittels des ersten Antriebmotors die Planetenradebene des Planetengetriebes, und mittels des zweiten Antriebmotors die Sonnenradebene des Planetengetriebes antreibbar. Diese Ausführungsform hat unter anderem den Vorteil, dass nun das Hohlrad (bzw. der Aussenkranz) des Planetengetriebes durch eine optimale Kräfteübetragung und das geschickt gewählte Übersetzungsverhältnis beliebig angetrieben werden kann. Auch in diesem Fall ist es möglich, die Drehung dieser freien An-/Abtriebsebene vollständig einzustellen, während sich die beiden Antriebmotoren in einem optimalen Drehzahlbereich drehen, oder aber das Hohlrad sehr fein drehen zu lassen, ohne dass die Antriebmotore überhitzt und den grossen Belastungen ausgesetzt werden. Dadurch kann durch eine derartige Antriebseinrichtung beispielsweise auch ein sehr geschickter und vorteilhafter Nabenantrieb simuliert werden.

In einer weiteren Ausführungsform der vorliegenden Erfindung ist die Antriebseinrichtung derart aufgebaut, dass die Kraftübertragungsanordnung zwischen dem ersten Antriebmotor und dem zweiten Antriebmotor platzierbar ist. Der Vorteil dieser Ausführungsform liegt insbesondere darin, dass eine noch kompaktere Bauweise der Antriebseinrichtung erreicht werden kann. Vor allem können die beiden Motoren und die Kraftübertragungsanordnung in einem einzigen Gehäuse untergebracht werden, so dass die ganze Antriebseinrichtung von aussen als eine kompakte Einheit geliefert und installiert werden kann. Insbesondere kann die Antriebseinrichtung auch gemäss Norm (z.B. IEC-Norm) gebaut werden. Dadurch kann die erfindungsgemässe Antriebseinrichtung praktisch überall anstelle eines herkömmlichen Elektromotors eingesetzt werden.

In vorteilhafter Weise ist ein Steuerungsmodul vorgesehen, mittels welchem Steuerungsmodul der erste Antriebmotor und/oder der zweite Antriebmotor steuerbar sind. Mittels dieses Steuerungsmoduls kann insbesondere die Drehzahl der beiden Antriebmotore so verändert werden, dass die resultierende Drehzahl der An-/Abtriebswelle (oder des Hohlrads des Planetengetriebes) nach dem jeweiligen Bedarf realisiert werden kann.

In einer Ausführungsform ist die An-/Abtriebswelle am Gehäuse mittels mindestens zwei Wellenlager unterstützbar. Diese Ausführungsform hat unter anderem den Vorteil, dass die An-/Abtriebswelle jederzeit einen guten Halt und eine gute Fixierung am Gehäuse hat. Dadurch können auch sehr hohe Belastungen auf der Welle (insbesondere auch lateral) problemlos kompensiert werden, ohne dass die Funktionsweise der Antriebseinrichtung beeinträchtigt, oder die resultierende Leistung vermindert wären.

In einer anderen Ausführungsform sind der erste Antriebmotor und der zweite Antriebmotor an der An-/Abtriebswelle mittels mindestens zwei Motorenlager unterstützbar. Diese Ausführungsform hat unter anderem den Vorteil, dass die beiden Antriebmotore gut unterstützt und fixiert werden, so dass keine Bewegungen und eventuelle Verstellungen der Kraftübertragungsanordnung geschehen können.

In einer weiteren Ausführungsform sind die Wellenlager und/oder die Motorenlager als Kugellager und/oder Gleitlager ausgebildet. Diese Ausführungsform hat insbesondere den Vorteil, dass sowohl Kugellager als auch Gleitlager in der Mechanik wohl bekannte Bauelemente sind, welche sehr einfach verwendet und nach Bedarf ausgewechselt werden können.

### Kurze Beschreibung der Zeichnungen

Eine vorteilhafte Ausgestaltung der Erfindung wird nachfolgend anhand der beiliegenden Zeichnungen beispielhaft näher erläutert.

Es zeigt:
Fig. 1 eine schematische perspektivische Darstellung der Antriebseinrichtung gemäss einer Ausführungsform der vorliegenden Erfindung;
Fig. 2 eine schematische perspektivische Explosionsansicht der Antriebseinrichtung gemäss einer Ausführungsform der vorliegenden Erfindung;
Fig. 3 eine Querschnittsansicht der Antriebseinrichtung gemäss einer Ausführungsform der vorliegenden Erfindung entlang der Linie III-III aus Fig. 1;
Fig. 4 eine Querschnittsansicht der Antriebseinrichtung gemäss einer Ausführungsform der vorliegenden Erfindung entlang der Linie IV-IV aus Fig. 1.

### Ausführungsformen der Erfindung

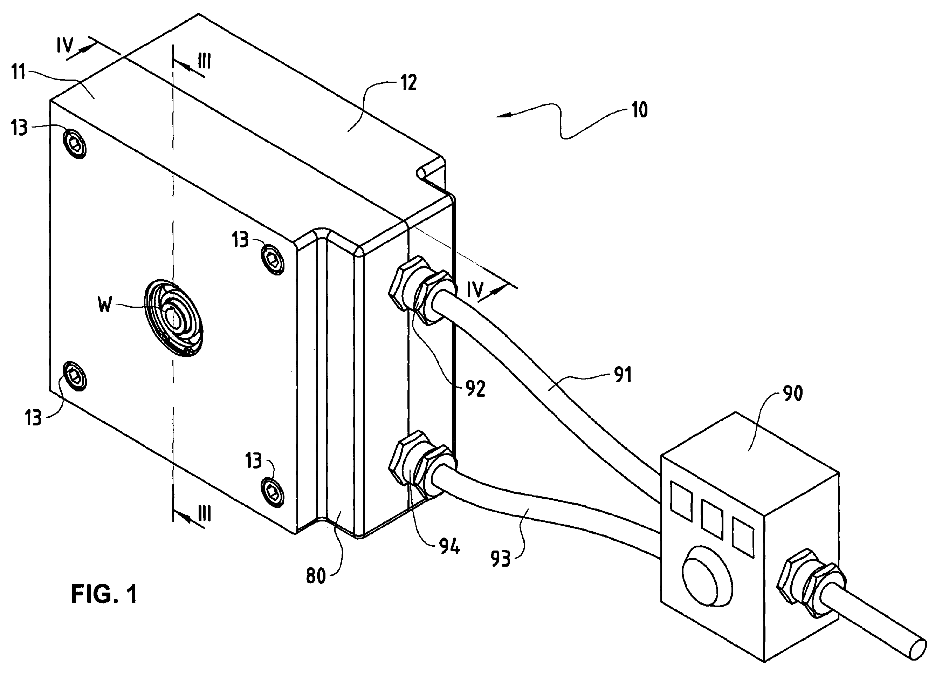

Fig. 1 zeigt schematisch eine perspektivische Darstellung der Antriebseinrichtung 10 gemäss einer Ausführungsform der vorliegenden Erfindung. In Fig. 1 beziehen sich die Bezugszeichen 11 und 12 auf die erste und zweite Hälfte des Gehäuses, in welchem grundsätzlich alle Bestandteile der Antriebseinrichtung 10 untergebracht sind. Diese beiden Hälften 11 und 12 werden mittels Befestigungselementen 13 miteinander verbunden und befestigt. Diese Befestigungselemente 13 können beispielsweise Schrauben, Stifte, Nieten oder andere ähnliche herkömmliche Befestigungselemente sein. Allerdings können nach Bedarf auch andere geeignete Befestigungselemente oder Befestigungsmethoden (Kleben, Schweissen, Löten, etc.) verwendet werden. In Fig. 1 sind vier solcher Befestigungselemente 13 dargestellt. Es ist aber für jeden Fachmann durchaus ersichtlich, dass auch die Anzahl der Befestigungselemente 13 nach Bedarf variieren kann, ohne dass deshalb vom ursprünglichen Erfindungsgedanken abgewichen wird.

Die Gehäusehälfte 11 in Fig. 1 weist eine Öffnung auf, durch welche die An-/Abtriebswelle W sichtbar ist. Diese An-/Abtriebswelle W kann mit einer beliebigen Vorrichtung verbunden werden, welche durch die erfindungsgemässe Antriebseinrichtung 10 angetrieben wird. Dazu können nach Bedarf geeignete Verbindungselemente und/oder Zwischenteile verwendet werden. Allerdings kann die Verbindung zwischen diesen Vorrichtungen und der An-/Abtriebswelle W gegebenenfalls auch direkt, ohne jegliche Zwischenelemente realisiert werden. Dabei kann die erfindungsgemässe Antriebseinrichtung 10 selbstverständlich so ausgeführt sein, dass die An-/Abtriebswelle W lediglich auf einer Seite, aber auch auf beiden Seiten des Gehäuses 11, 12 sichtbar bzw. erreichbar ist. Für einen Fachmann ist es auch hier klar, dass es sich dabei um Ausführungsformen handelt, welche den Erfindungsgrundgedanken vollumfänglich unterstützen.

In Fig. 1 bezieht sich das Bezugszeichen 90 auf ein Steuerungsmodul, welches mittels der Verbindungsleitungen 91, 93 und der entsprechenden Verbindungsstecker 92, 94 mit der Antriebseinrichtung 10 verbunden ist. Beim Steuerungsmodul 90 kann es sich beispielsweise um ein übliches Steuerungsmodul für Elektromotoren, aber auch um ein eigens an die Bedürfnisse der erfindungsgemässen Antriebseinrichtung 10 angepasstes Steuerungsmodul handeln. Dank diesem Steuerungsmodul 90 kann der Betrieb der erfindungsgemässen Antriebseinrichtung 10 kontrolliert und gesteuert werden (wie etwas weiter unten detaillierter beschrieben wird). Schliesslich bezieht sich das Bezugszeichen 80 in Fig. 1 auf eine Kontrollaushöhlung, welche im Gehäuse 11, 12 vorgesehen ist, so dass darin weitere Elemente untergebracht werden können, welche zusammen mit dem Steuerungsmodul 90 zur Kontrolle bzw. Steuerung der Antriebseinrichtung 10 verwendet werden.

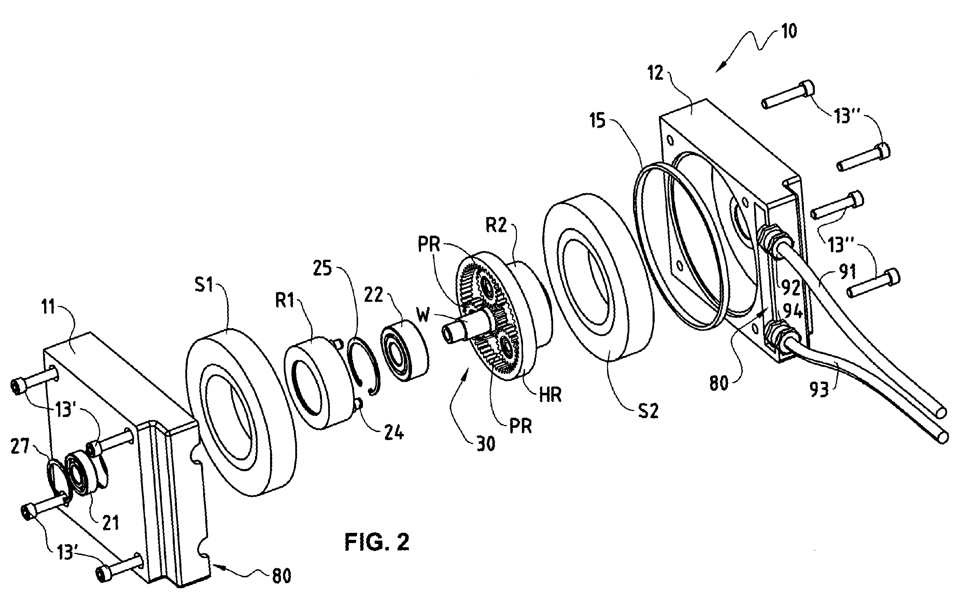

In Fig. 2 wird schematisch eine perspektivische Explosionsansicht der Antriebseinrichtung 10 gemäss einer Ausführungsform der vorliegenden Erfindung gezeigt. Die Elemente der Antriebseinrichtung 10, welche bereits in Fig. 1 beschrieben sind, tragen auch in Fig. 2 die gleichen Bezugszeichen. So beziehen sich die Bezugszeichen 11 und 12 auf die beiden Hälften des Gehäuses der Antriebseinrichtung 10. Die Bezugszeichen 13' und 13" stehen für die beidseitigen Teile der Befestigungselemente 13 aus Fig. 1, während die Verbindungsleitungen zwischen dem Steuerungsmodul (nicht dargestellt) und die Verbindungsstecker mit den Bezugszeichen 91 und 93, bzw. 92 und 94 versehen sind. Schliesslich bezieht sich das Bezugszeichen 80 ebenso auf die Kontrollaushöhlung im Gehäuse 11, 12, in welchem Kontroll- bzw. Steuerungselemente untergebracht werden können.

Die Antriebseinrichtung 10 in Fig. 2 umfasst einen ersten Antriebmotor S1, R1 und einen zweiten Antriebmotor S2, R2. Dabei beziehen sich die Bezugszeichen S1, S2 auf die Statoren und die Bezugszeichen R1, R2 auf die Rotoren der beiden Antriebmotore. Bei den beiden Antriebmotoren S1, R1, bzw. S2, R2 kann es sich um herkömmliche Elektromotore handeln. So können die beiden Antriebmotore S1, R1 und S2, R2 zum Beispiel Asynchronmotore mit identischen Eigenschaften sein. Allerdings können die Eigenschaften des ersten Antriebmotors S1, R1 und die Eigenschaften des zweiten Antriebmotors S2, R2 auch unterschiedlich sein, wobei die Motorentypen trotzdem gleich bleiben. Schliesslich ist aber auch eine solche Situation vorstellbar, bei welcher die beiden Antriebmotore S1, R1 und S2, R2 unterschiedliche Motorentypen (beispielsweise ein Synchron- und ein Asynchronmotor) aufweisen.

In Fig. 2 bezieht sich das Bezugszeichen 30 auf eine Kraftübertragungsanordnung. Diese Kraftübertragungsanordnung 30 besteht aus einem Planetengetriebe, welches drei An-/Abtriebsebenen umfasst. Das Planetengetriebe 30 umfasst ein Sonnenrad, welches mit der An-/Abtriebswelle W direkt verbunden ist. Grundsätzlich kann anstelle eines mit der An-/Abtriebswelle W verbundenen Sonnenrades auch eine Ritzelwelle verwendet werden. Des Weiteren umfasst das Planetengetriebe 30 drei Planetenräder PR, wobei selbstverständlich auch Ausführungsformen mit weniger oder mehr als drei Planetenrädern PR durchaus denkbar sind. Die drei Planetenräder PR greifen in die Zähne des Sonnenrads, bzw. in die Ritzel der Ritzelwelle W ein. Das Planetengetriebe 30 wird am Ende durch ein Hohlrad HR (auch Aussenkranz genannt) mit Innenverzahnung abgeschlossen, wobei die einzelnen Planetenräder PR in die Zähne des Hohlrads HR eingreifen. Mittels dieser Kraftübertragungsanordnung 30 können insbesondere die Leistungen des ersten Antriebmotors S1, R1 und des zweiten Antriebmotors S2, R2 in einer vorteilhaften Weise an die An-/Abtriebswelle W übertragen werden.

Dazu wird, wie in Fig. 2 dargestellt, die Antriebseinrichtung 10 derart gebaut, dass der erste Antriebmotor S1, R1 mit der Planetenradebene PR des Planetengetriebes 30 verbunden ist, während der zweite Antriebmotor S2, R2 mit der Hohlradebene HR des Planetengetriebes 30 verbunden wird. Beim Betrieb der beiden Antriebmotore S1, R1 und S2, R2 werden also jeweils die Planetenrad- bzw. die Hohlradebene des Planetengetriebes 30 angetrieben. Der Rotor des ersten Antriebmotors R1 mit den daran ausgebildeten Bolzen 24 übernimmt dabei die Rolle des so genannten Planetenträgers oder Stegs.

Durch ein geschickt gewähltes Übersetzungsverhältnis der Planetengetrieberäder W, PR, HR und eine präzise Steuerung der beiden Antriebmotore S1, R1 und S2, R2 (beispielsweise mittels eines besonderen Steuerungsmoduls) kann die Drehgeschwindigkeit (und auch die Drehrichtung) der An-/Abtriebswelle W in diesem Fall sehr genau geregelt werden. Insbesondere ist es beispielsweise möglich, die beiden Antriebmotore S1, R1 und S2, R2 in einem vorbestimmten Verhältnis so miteinander laufen zu lassen, dass sich die An-/Abtriebswelle W im Stillstand befindet. Dazu muss grundsätzlich der eine Antriebmotor (z.B. S1, R1) in die eine Richtung und der andere Antriebmotor (z.B. S2, R2) in die entgegengesetzte Richtung gedreht werden, wobei deren Drehgeschwindigkeiten sich nach dem Übersetzungsverhältnis des Planetengetriebes 30 zu Null summieren. Um die An-/Abtriebswelle W anschliessend in Bewegung zu setzen, kann lediglich die Drehgeschwindigkeit des einen (oder der beiden) Antriebmotors leicht verändert werden, wodurch eine geringe resultierende Drehbewegung der An-/Abtriebswelle W gewährleistet wird. Ausserdem ist es ebenfalls möglich, die beiden Antriebmotore S1, R1 und S2, R2 in dieselbe Richtung drehen zu lassen, wobei sich ihre Leistungen gemäss dem Übersetzungsverhältnis des Planetengetriebes 30 zu einer noch höheren Leistung summieren. So können mittels einer solchen erfindungsgemässen Antriebseinrichtung 10 grundsätzlich alle Drehzahlen der An-/Abtriebswelle W erreicht werden, und dies in der Spanne zwischen -Max (wenn sich beide Antriebmotore S1, R1 und S2, R2 mit maximaler Geschwindigkeit in die negative Richtung drehen) und +Max (wenn sich beide Antriebmotore S1, R1 und S2, R2 mit maximaler Geschwindigkeit in die positive Richtung drehen). An die An-/ Abtriebswelle W können grundsätzlich beliebige Vorrichtungen angeschlossen und so angetrieben werden, wie bei einem herkömmlichen Motor. Dabei entstehen aber offensichtlich keine Probleme mit hohen Anfahrmomenten wie bei den herkömmlichen Elektromotoren. Zudem bewegen sich die beiden Antriebmotore S1, R1 und S2, R2 stets in einem optimalen Drehzahlbereich, so dass auch der allgemeine Wirkungsgrad einer derartigen erfindungsgemässen Antriebseinrichtung 10 im Vergleich mit dem Wirkungsgrad eines gewöhnlichen Motors wesentlich vorteilhafter ist.

Allerdings kann die erfindungsgemässe Antriebseinrichtung 10 auch so gebaut werden, dass die Planetenradebene PR des Planetengetriebes 30 erneut durch den ersten Antriebmotor S1, R1 angetrieben wird, während nun der zweite Antriebmotor S2, R2 mit der Sonnenradebene W des Planetengetriebes 30 verbunden wird. Dadurch werden Sonnenrad- und die Planetenradebene des Planetengetriebes angetrieben, während die dritte Planetenradebene (die Hohlradebene) als Abtrieb verwendet wird. In diesem Fall kann bei einem geschickt gewählten Übersetzungsverhältnis der Planetengetrieberäder W, PR, HR und einer präzisen Steuerung der beiden Antriebmotore S1, R1 und S2, R2 die Drehgeschwindigkeit (und auch die Drehrichtung) des Hohlrads HR sehr genau geregelt werden. Dabei ergeben sich grundsätzlich dieselben Vorteile, wie bei der oben beschriebenen Ausführungsform der Antriebseinrichtung 10. Insbesondere können mittels einer solchen erfindungsgemässen Antriebseinrichtung 10 grundsätzlich alle Drehzahlen des Hohlrads (Aussenkranzes) HR in der Spanne zwischen -Max und +Max erreicht werden, ohne hohe Anfahrmomente und mit einem sehr guten Wirkungsgrad. An das Hohlrad HR können dann ebenfalls grundsätzlich beliebige Vorrichtungen angeschlossen und so angetrieben werden, wie bei einem herkömmlichen Motor. Allerdings eignet sich diese Ausführungsform der erfindungsgemässen Antriebseinrichtung 10 insbesondere für den Einsatz bei Fahrrädern oder ähnlichen Vorrichtungen, da sie anstelle eines herkömmlichen Nabenmotors eingesetzt werden kann.

Wie in Fig. 2 dargestellt, kann die Antriebseinrichtung 10 insbesondere auch so aufgebaut sein, dass die Kraftübertragungsanordnung (das Planetengetriebe) 30 genau zwischen dem ersten Antriebmotor S1, R1 und dem zweiten Antriebmotor S2, R2 platziert wird. Die beiden Antriebmotore S1, R1 und S2, R2 werden dann im Gehäuse 11, 12 durch ein Zentrierring 15 zentriert. Ausserdem wird dann die An-/Abtriebswelle W mittels mindestens zwei Wellenlager 21 am Gehäuse 11, 12 unterstützt. Gleichzeitig werden sowohl der erste Antriebmotor S1, R1 als auch der zweite Antriebmotor S2, R2 mittels mindestens zwei Motorenlager 22 an der An-/Abtriebswelle W unterstützt. Bei den Lagern 21, 22 kann es sich insbesondere um Kugellager und/oder Gleitlager handeln. Selbstverständlich sind aber auch andere Arten von Lagern möglich. Die Lager 21 und 22 werden jeweils durch die Sicherungsringe 25 und 27 so gesichert, dass die seitlichen Bewegungen der Lager 21, 22 nicht möglich werden. Es ist aber selbstverständlich denkbar, auch andere Sicherungsmethoden bzw. -einrichtungen zu verwenden, ohne dass dies einen negativen Einfluss auf den erfindungsgemässen Gedanken ausüben würde.

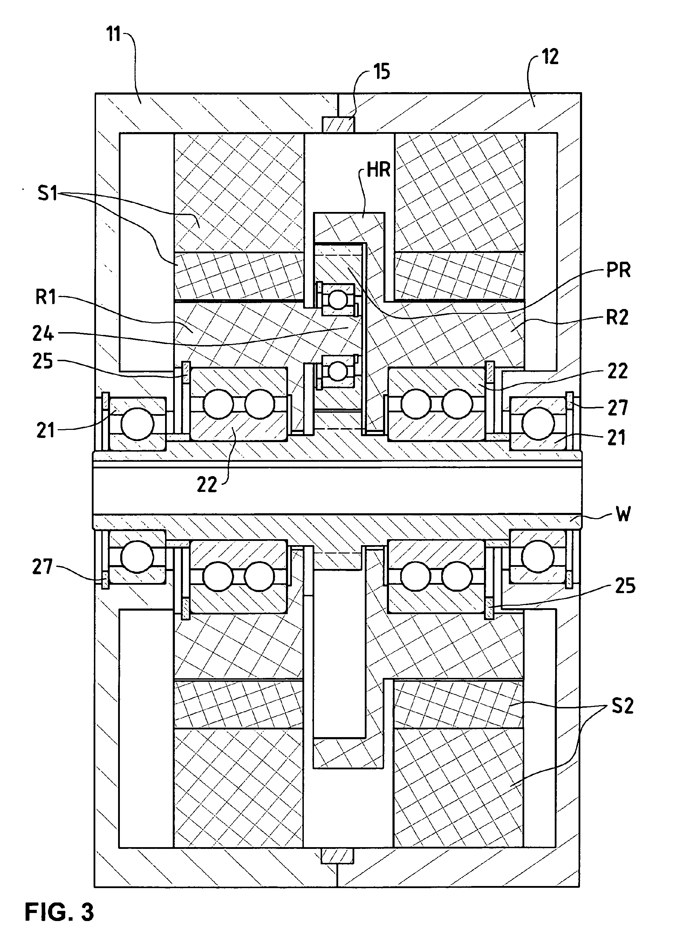

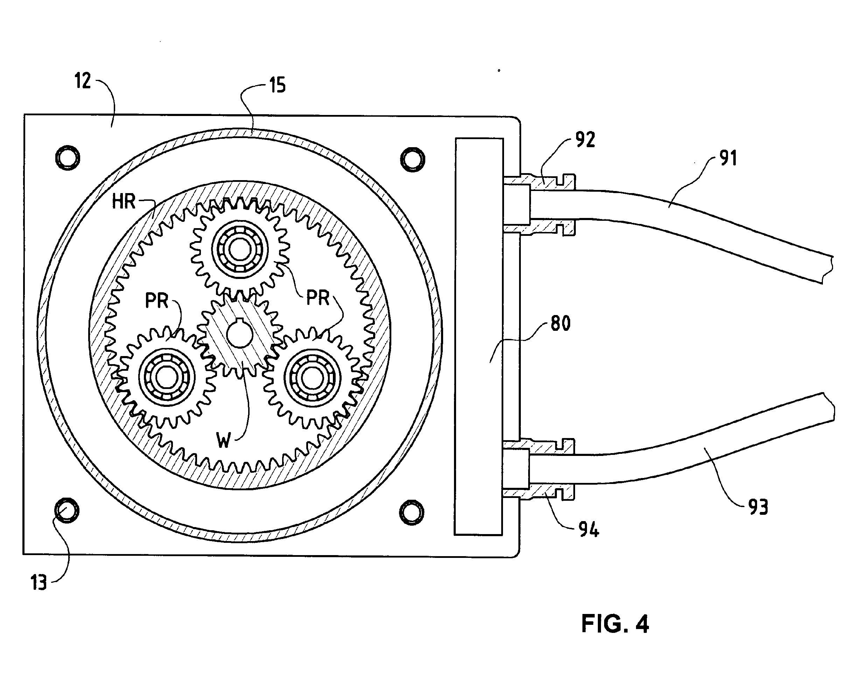

Fig. 3 und Fig. 4 illustrieren die Antriebseinrichtung 10 gemäss einer Ausführungsform der vorliegenden Erfindung in einer Querschnittsansicht, wobei der Schnitt in Fig. 3 entlang der Linie III-III aus Fig. 1, und in Fig. 4 entlang der Linie IV-IV aus Fig. 1 verläuft. In den beiden Figuren können die oben beschriebenen Elemente der erfindungsgemässen Antriebseinrichtung 10 noch deutlicher wahrgenommen werden. Auch in diesen Figuren beziehen sich die gleichen Bezugszeichen auf die gleichen Elemente, so dass hier auf deren erneute Auflistung verzichtet wird. In Fig. 3 kann sehr deutlich gesehen werden, wie die Kraftübertragungsanordnung (das Planetengetriebe) 30 zwischen den beiden Antriebmotoren S1, R1 und S2, R2 platziert werden kann. So können die Vorteile der kompakten Bauweise mit den Vorteile einer sehr präzisen und fast unbegrenzt verwendbaren Antriebseinrichtung 10 kombiniert werden.

Zum Schluss sei darauf hingewiesen, dass die hier beispielhaft beschriebenen Ausführungsformen der erfindungsgemässen Antriebseinrichtung 10 nur eine Auswahl an möglichen Realisierungen der erfindungsgemässen Gedanken darstellen und keinesfalls als limitierend angeschaut werden sollen. Der Fachmann wird verstehen, dass viele andere Implementierungen der Erfindung möglich sind, ohne dass die wesentlichen Merkmale der Erfindung vernachlässigt werden.

## Patentansprüche

1. Antriebseinrichtung (10), umfassend mindestens einen ersten Antriebmotor (S1, R1), einen zweiten Antriebmotor (S2, R2) und eine Kraftübertragungsanordnung (30) in Form eines Planetengetriebes (W, PR, HR) mit drei An-/Abtriebsebenen, nämlich einer Sonnenradebene, einer Planetenradebene (PR) und einer Hohlradebene (HR), wobei die Leistungen des ersten Antriebmotors (S1, R1) und/oder des zweiten Antriebmotors (S2, R2) über die Kraftübertragungsanordnung (30) an eine Abtriebswelle (W) übertragbar sind,
**dadurch gekennzeichnet,**
**dass** die Kraftübertragungsanordnung (30) zwischen dem ersten Antriebmotor (S1, R1) und dem zweiten Antriebmotor (S2, R2) angeordnet ist, dass die Antriebseinrichtung frei von Hohlwellen ist, in denen andere Wellen laufen, und dass die Abtriebswelle (W) entweder mit der Sonnenradebene oder mit der Hohlradebene (HR) des Planetengetriebes fest verbunden ist.

2. Antriebseinrichtung (10) gemäss Anspruch 1, **dadurch gekennzeichnet, dass** die Sonnenradebene des Planetengetriebes mit der Abtriebswelle (W) der Antriebseinrichtung (10) fest verbunden oder als diese Abtriebswelle (W) ausgebildet ist.

3. Antriebseinrichtung (10) gemäss Anspruch 1 oder 2, **dadurch gekennzeichnet, dass** mittels des ersten Antriebmotors (S1, R1) die Planetenradebene (PR) des Planetengetriebes und mittels des zweiten Antriebmotors (S2, R2) die Hohlradebene (HR) des Planetengetriebes antreibbar sind.

4. Antriebseinrichtung (10) gemäss Anspruch 1, **dadurch gekennzeichnet, dass** mittels des ersten Antriebmotors (S1, R1) die Planetenradebene (PR) des Planetengetriebes und mittels des zweiten Antriebmotors (S2, R2) die Sonnenradebene des Planetengetriebes antreibbar sind, und dass die Abtriebswelle (W) mit der Hohlradebene (HR) des Planetengetriebes verbunden ist..

5. Antriebseinrichtung (10) gemäss einem der Ansprüche 1 bis 4, **dadurch gekennzeichnet, dass** ein Steuerungsmodul (90) vorgesehen ist, mittels welchem Steuerungsmodul (90) der erste Antriebmotor (S1, R1) und/oder der zweite Antriebmotor (S2, R2) steuerbar sind.

6. Antriebseinrichtung (10) gemäss einem der Ansprüche 1 bis 5, **dadurch gekennzeichnet, dass** die Antriebseinrichtung (10) in ein Gehäuse (11, 12) eingebaut ist, und dass die Abtriebswelle (W) am Gehäuse (11, 12) mittels mindestens zwei Wellenlager (21) unterstützbar ist.

7. Antriebseinrichtung (10) gemäss einem der Ansprüche 1 bis 5, **dadurch gekennzeichnet, dass** der erste Antriebmotor (S1, R1) und der zweite Antriebmotor (S2, R2) an der Abtriebswelle (W) mittels mindestens zwei Motorenlagern (22) unterstützbar sind.

8. Antriebseinrichtung (10) gemäss Anspruch 6 oder 7, **dadurch gekennzeichnet, dass** die Wellenlager (21) und/oder die Motorenlager (22) als Kugellager und/oder Gleitlager ausgebildet sind.

9. Antriebseinrichtung (10) gemäss einem der vorstehenden Ansprüche, **dadurch gekennzeichnet, dass** die Antriebmotoren (S1, R1; S2, R2) Elektromotoren sind.

10. Antriebseinrichtung (10) gemäss Anspruch 9, **dadurch gekennzeichnet, dass** die Drehzahl der Elektromotoren regelbar ist.

## Claims

1. Drive device (10), comprising at least one first drive motor (S1, R1), a second drive motor (S2, R2) and a force transmission arrangement (30) in the form of a planet gear (W, PR, HR) with three input/output levels, namely a sun wheel level, a planet wheel level (PR) and a ring gear level (HR), the outputs of the first drive motor (S1, R1) and/or of the second drive motor (S2, R2) being transmittable via the force transmission arrangement (30) to a driven shaft (W),
**characterised**
**in that** the force transmission arrangement (30) is disposed between the first drive motor (S1, R1) and the second drive motor (S2, R2), in that the drive device is free of hollow shafts in which other shafts run, and in that the driven shaft (W) is firmly connected either to the sun wheel level or to the ring gear level (HR) of the planet gear.

2. Drive device (10) according to claim 1, **characterised in that** the sun wheel level of the planet gear is firmly connected to the driven shaft (W) of the drive device (10) or is designed as this driven shaft (W).

3. Drive device (10) according to claim 1 or 2, **characterised in that** the planet wheel level (PR) of the planet gear is drivable by means of the first drive motor (S1, R1), and the ring gear level (HR) of the planet gear is drivable by means of the second drive motor (S2, R2).

4. Drive device (10) according to claim 1, **characterised in that** the planet wheel level (PR) of the planet gear is drivable by means of the first drive motor (S1, R1), and the sun wheel level of the planet gear is drivable by means of the second drive motor (S2, R2), and **in that** the driven shaft (W) is connected to the ring gear level (HR) of the planet gear.

5. Drive device (10) according to one of the claims 1 to 4, **characterised in that** a control module (90) is provided by means of which control module (90) the first drive motor (S1, R1) and/or the second drive motor (S2, R2) are controllable.

6. Drive device (10) according to one of the claims 1 to 5, **characterised in that** the drive device (10) is installed in a housing (11, 12), and **in that** the driven shaft (W) is supportable on the housing (11, 12) by means of at least two shaft bearings (21).

7. Drive device (10) according to one of the claims 1 to 5, **characterised in that** the first drive motor (S1, R1) and the second drive motor (S2, R2) are supportable on the driven shaft (W) by means of at least two motor bearings (22).

8. Drive device (10) according to claim 6 or 7, **characterised in that** the shaft bearings (21) and/or the motor bearings (22) are designed as ball bearings and/or sliding bearings.

9. Drive device (10) according to one of the preceding claims, **characterised in that** the drive motors (S1, R1; S2, R2) are electromotors.

10. Drive device (10) according to claim 9, **characterised in that** the rotational speed of the electromotors is adjustable.

## Revendications

1. Dispositif d'entraînement (10) comprenant au moins un premier moteur d'entraînement (S1, R1), un second moteur d'entraînement (S2, R2) et un dispositif de transmission de force (30) sous forme d'un réducteur planétaire (W, PR, HR) avec trois plans d'entrée/de sortie, notamment un plan planétaire intérieur, un plan satellite (PR) et un plan planétaire extérieur (HR), les puissances du premier moteur d'entraînement (S1, R1) et/ou du second moteur d'entraînement (S2, R2) étant transmissibles par un dispositif de transmission de force (30) sur un arbre de sortie (W),
**caractérisé en ce que**
le premier dispositif de transmission de force (30) est disposé entre le premier moteur d'entraînement (S1, R1) et le second moteur d'entraînement (S2, R2), **en ce que** le dispositif de transmission de force est exempt d'arbres creux dans lesquels d'autres arbres tournent et **en ce que** l'arbre de sortie (W) est relié soit fixement au plan planétaire intérieur ou au plan planétaire extérieur (HR) du réducteur planétaire.

2. Dispositif d'entraînement (10) selon la revendication 1, **caractérisé en ce que** le plan planétaire intérieur du réducteur planétaire est relié fixement à l'arbre de sortie (W) du dispositif d'entraînement (10) ou est réalisé en tant qu'arbre de sortie (W).

3. Dispositif d'entraînement (10) selon la revendication 1, **caractérisé en ce que** le plan satellite (PR) du réducteur planétaire est entraîné au moyen du premier moteur d'entraînement (S1, R1), et le plan planétaire extérieur (HR) du réducteur planétaire est entraîné au moyen du second moteur d'entraînement (S2, R2).

4. Dispositif d'entraînement (10) selon la revendication 1, **caractérisé en ce que** le plan satellite (PR) du réducteur planétaire est entraîné au moyen du premier moteur d'entraînement (S1, R1), et le plan planétaire intérieur du réducteur planétaire est entraîné au moyen du second moteur d'entraînement (S2, R2), et **en ce que** l'arbre de sortie (W) est relié au plan planétaire extérieur (HR).

5. Dispositif d'entraînement (10) selon l'une des revendications 1 à 4, **caractérisé en ce qu'**il est prévu un module de commande (90), module de commande (90) au moyen duquel le premier moteur d'entraînement (S1, R1) et/ou le second moteur d'entraînement (S2, R2) peuvent être commandés.

6. Dispositif d'entraînement (10) selon l'une des revendications 1 à 5, **caractérisé en ce que** le dispositif d'entraînement (10) est monté dans un carter (11, 12) et **en ce que** l'arbre de sortie (W) peut être soutenu au moyen d'au moins deux paliers d'arbre (21).

7. Dispositif d'entraînement (10) selon l'une des revendications 1 à 5, **caractérisé en ce que** le premier moteur d'entraînement (S1, R1) et le second moteur d'entraînement (S2, R2) peuvent être soutenus sur l'arbre de sortie (W) au moyen de deux paliers de moteur (22).

8. Dispositif d'entraînement (10) selon la revendication 6 ou 7, **caractérisé en ce que** les paliers d'arbre (21) et/ou les paliers de moteur (22) sont réalisés comme des paliers à billes et/ou des paliers lisses.

9. Dispositif d'entraînement (10) selon l'une des revendications précédentes, **caractérisé en ce que** les moteurs d'entraînement (S1, R1; S2, R2) sont des moteurs électriques.

10. Dispositif d'entraînement (10) selon la revendication 9, **caractérisé en ce que** le nombre de tours des moteurs électriques est réglable.
